# EUROPÄISCHE PATENTSCHRIFT

(11) **EP 2 336 036 B1**
(45) Veröffentlichungstag und Bekanntmachung des Hinweises auf die Patenterteilung: **17.04.2013**
(21) Anmeldenummer: 10015645.4
(22) Anmeldetag: 15.12.2010
(51) Int. Cl.: B65B 51/14

(54) **Vorrichtung zur Vakuumisierung von flexiblen Behältern für Abfallstoffe**
Device for creating a vacuum in flexible waste product containers
Dispositif de mise sous vide de récipients flexibles pour déchets

(30) Priorität: 15.12.2009 DE 202009016881 U
(43) Veröffentlichungstag der Anmeldung: 22.06.2011
(73) Patentinhaber: dotcomCapital GmbH, 51109 Köln (DE)
(72) Erfinder: Heinrichs, Klaus Werner, 51109 Köln (DE); Metzner, Claus Jörg, 51109 Köln (DE)
(74) Vertreter: Demski, Siegfried

(56) Entgegenhaltungen:
- WO-A1-2007/048925
- DE-U1- 29 517 137
- US-A- 5 352 323
- US-A1- 2006 207 226
- US-A1- 2009 255 221

## Beschreibung

Die Erfindung betrifft eine Vorrichtung zur Vakuumisierung von flexiblen Behältem für Abfallstoffe, umfassend zumindest ein Steuerungsgerät mit einer Halterung für die Behälter, wenigstens einer Vakuumeinrichtung und einer Schweißvorrichtung, wobei die Behälter mit ihrer Öffnungsseite in eine Vakuumöffnung einlegbar sind.

Gattungsgemäße Vorrichtungen zur Vakuumisierung werden zur umweitverträglichen Lagerung und für den Transport von Abfällen eingesetzt, insbesondere wenn bei ungeschützter Lagerung oder einem Transport Gefahr für die Personen ausgeht, die mit diesen Abfällen bei der Lagerung oder dem Transport in Kontakt kommen. Aus diesem Grunde wird zum Schutz der Umwelt vor den zu lagernden und zu transportierenden Abfällen bereits am Entstehungsort der Abfall in geeignete Einwegabfallsäcke (flexible Behälter) gefüllt, um dann vakuumisiert und eingeschweißt zu werden. Hierbei wird durch den Unterdruck im Abfallsack sichergestellt, dass selbst, wenn der Abfallsack nicht gasdicht ausgebildet ist, keine Luft oder in der Luft gebundene Schadstoffe aus dem Abfallsack in die Umgebungsluft gelangen.

Aus dem Stand der Technik sind Verfahren und Vorrichtungen bekannt, die diesen Vorgang mittels eines Innenvakuumgerätes oder eines sogenannten Kammergerätes realisieren sollen, wobei der Sack in eine große Kammer eingelegt wird, um einen Druckausgleich von Außen- und Innendruck zu erzeugen. Diese Geräte haben sich jedoch nicht bewährt, weil sie extrem voluminös und stark schmutzanfällig im Inneren der Kammer sind. Alternativ sind Außenvakuumgeräte bekannt, bei denen nur die offene Seite des Abfallsackes in die eigentliche Vakuumkammer eingelegt wird. Nach Erreichen eines entsprechenden Unterdrucks wurde bei Geräten aus dem Stand der Technik der Abfallsack mit einem außerhalb der Vakuumkammer befindlichen Heizdraht gasdicht verschweißt. Bei dieser Ausführungsvariante eines Außenvakuumgerätes wird nur die Öffnung des Sackes in die Vakuumkammer eingelegt, somit ist eine Absaugung der Luft nur dann möglich, wenn der Sack an der Oberfläche seiner Innenseite so gestaltet ist, dass die Innenseite des Sackes eine Luftverbindung mit der Vakuumkammer aufweist.

Bei den vorgenannten Ausführungsvarianten sind verschiedene Probleme aufgetreten, beispielsweise kann der gefüllte Einwegabfallsack vor Beginn der Vakuumisierung, wenn er mit seiner Öffnung in die Vakuumkamme eingelegt wird, auf eine Unterlage abgestellt werden. Durch Absaugen der inneren Gase im Einwegabfallsack verändert sich die ursprüngliche Hängetiefe des Sackbodens. Der Einwegabfallsack hebt sich hierbei quasi vom Boden ab und hängt nur noch an der Vakuumkammer. Die Verschweißung erfolgt durch Vulkanisierung des Sackmaterials, wobei eine Schweißvorrichtung zwischen Vakuumkammer und Einwegabfallsack angeordnet ist. Das Hängegewicht des vakuumisierten und verkürzten Einwegabfallsackes zieht nun direkt an der heißen Schweißnaht, was sehr häufig zum Abriss des Einwegabfallsackes an der heißen Schweißnaht führte. Der Vakuumisierungsvorgang war in diesem Fall somit nicht erfolgreich. In der Regel werden hierbei Einwegabfallsäcke aus Kunststoffverbundsäcken beispielsweise PE/PA verwendet. Die PE-Folie kann auf der Innenseite verschweißt werden, während PA auf der Außenseite gasdicht ausgebildet ist. Die PE-Folie ist hierbei so gestaltet (Gofriert/Gaufriert), dass eine Verbindung von der Vakuumkammer in den Sack gewährleistet ist.

Aus der US-Anmeldung 2006/0207226 A1 ist ein Haushaltsgerät zum Verschweißen von kleineren Kunststoffbeuteln bekannt, wobei eine Vakuumisierung des Kunststoffbeutels vorgesehen ist. Der erforderliche Schweißbalken zum Verschließen des Beutels befindet sich hierbei in einer umlaufenden Dichtung.

Aus dem US-Patent 5,352,323 ist ebenfalls ein Haushaltsgerät bekannt, welches zum Vakuumisieren und Verschweißen von Kunststoffbeuteln vorgesehen ist. Damit die Luft aus dem Vorratsbehälter abgesaugt werden kann, ist hierzu eine Froschklemme vorgesehen, welche in einem Durchbruch einen Schlauch aufnehmen kann, der unmittelbar mit dem Vakuum erzeugenden Gerät verbunden ist, während das freie Ende in den Kunststoffbehälter eingeführt werden muss.

Aus dem deutschen Gebrauchsmuster 295 17 137 U1 ist eine rahmenförmige Spange zum Aufnehmen von Säcken bekannt, wobei es lediglich darum geht, die Öffnung des Sackes in einem Rahmen aufzuspannen, damit dieser befüllt werden kann.

Die aus dem Stand der Technik bekannten Haushaltsgeräte sind aufgrund ihrer Konstruktion jedoch nicht geeignet, groß volumige Abfallsäcke aufzunehmen, um diese nach erfolgter Vakuumisierung zu verschweißen, weil keine ausreichende, das Gewicht des Müllsackes aufnehmende Klemmbefestigung des Müllsackes vorgesehen ist.

Um die Nachteile aus dem bekannten Stand der Technik zu vermeiden, liegt der vorliegenden Erfindung die Aufgabe zugrunde, eine Vorrichtung zur Vakuumisierung von flexiblen Behältern weiter zu verbessern, um die aufgetretenen Probleme aus dem Stand der Technik zu vermeiden.

Erfindungsgemäß ist zur Lösung der Aufgabe vorgesehen, dass die Vakuumöffnung flach bauend ausgeführt ist und die Schweißvorrichtung innerhalb einer umrandeten Dichtung der Vakuumöffnung angeordnet ist, welche aus einer Grundplatte und einem Niederhalter besteht, wobei die Grundplatte zumindest eine, vorzugsweise mehrere Klemmelemente zur Aufnahme der Öffnungsseite des Behälters in der Art aufweist, dass die Öffnungsseite von den Klemmelementen nur teilweise verschlossen wird Weitere vorteilhafte Ausgestaltungen der Erfindung ergeben sich aus den Unteransprüchen.

Durch eine flach bauende Vakuumöffnung besteht in vorteilhafter Weise die Möglichkeit den flexiblen Behälter mit seiner Öffnung innerhalb der Vakuumöffnung einzulegen, und zwar vorzugsweise in seiner vollen Breite. Durch die Anordnung der Schweißvorrichtung innerhalb einer umrandeten Dichtung der Vakuumöffnung wird hierbei in vorteilhafter Weise ein Abreißen des Behälters aufgrund des Eigengewichtes verhindert. Der gesamte flexible Behälter wird bei der erfindungsgemäßen Ausführung durch die Vakuumöffnung insbesondere die umrandete Dichtung gehalten, welche eventuell auftretende Gewichtskräfte aufnimmt und das Ende des flexiblen Behälters in einer Position sicher fixiert. Somit kann durch die Stabilisierung des flexiblen Behälters unabhängig von einer außerhalb der Vorrichtung vorhandenen abstützenden Einrichtung das gesamte Gewicht des flexiblen Behälters samt Inhalt durch die Vakuumdichtung gehalten werden und es kann mit Hilfe der innerhalb der Vakuumdichtung liegenden Schweißvorrichtung der Schweißvorgang ausgeführt werden. Hierbei besteht weder die Gefahr eines vorzeitigen Abreißens des flexiblen Behälters entlang der Schweißvorrichtung noch die Gefahr einer mangelhaft ausgeführten Verschweißung. Im Unterschied zu anderen Außenvakuumgeräten kann der flexible Behälter vor dem Gerät stehen und mit seiner Öffnung in die Vakuumkammer eingelegt und befestigt werden. Beim Vakuumisieren hebt sich der Einwegabfallsack von der Sackauflage ab und hängt später frei an der Vorrichtung, insbesondere der Vakuumöffnung. Durch den bisher eingesetzten außen liegenden Schweißbalken nach dem Stand der Technik würde der freihängende Einwegabfallsack bei dem üblichen Vakuumgerät durch das Vulkanisieren des Einwegabfallsackes beim Verschweißen an der heißen Schweißnaht abreißen und undicht werden. Dies wird durch die erfindungsgemäße Ausführung verhindert, weil die Schweißvorrichtung, beispielsweise ein Schweißbalken verfahrenstechnisch in die Vakuumkammer, dass heißt innerhalb der Vakuumöffnung angeordnet ist. Somit wird die Last des frei hängenden Einwegabfallsackes durch die dem Einwegabfallsack zugewandte Seite der Vakuumdichtung sicher gehalten, bis die Schweißnaht abgekühlt ist. Darüber hinaus wird sichergestellt, dass auch nach dem Schweißen der Unterdruck in der Kammer aufrecht erhalten wird, bis die Schweißnaht abgekühlt ist. Somit kann in vorteilhafter Weise nicht nur eine sichere Verschweißung der Öffnung des flexiblen Behälters durchgeführt werden, sondern darüber hinaus gewährleistet werden, dass das erzeugte Vakuum innerhalb des flexiblen Behälters beibehalten wird.

Bei der erfindungsgemäßen Vorrichtung wird der flexible Behälter direkt in die Vakuumöffnung eingelegt, wobei die Vakuumöffnung so positioniert werden kann, das marktgängige Abfallsammler für diese Einwegabfallsäcke vor das Gerät gefahren werden können und der Einwegabfallsack aus dem Abfallsammler mit seiner Öffnung in die Kammer eingelegt werden kann, ohne ihn aus dem Sammler entnehmen zu müssen.

In vorteilhafter Ausgestaltung der Erfindung kann der freie Querschnitt der Öffnung zum Absaugen des gasförmigen Sackinhaltes durch das Einnähen oder Einschweißen eines Raschelgewebes in der Sackinnenseite vergrößert werden. Hierbei wird durch die Lage des Raschelgewebes der Mindestfüllstand des Sackes vorbestimmt und sichergestellt, dass eine optimale Vakuumisierung durchgeführt werden kann.

In vorteilhafter Ausgestaltung der Erfindung ist im Weiteren vorgesehen, dass die Vakuumöffnung aus einer ortsfest gehaltenen Grundplatte besteht, an der eine annähernd gleichgroße schwenkbewegliche Platte als Niederhalter befestigt sein kann. Die schwenkbewegliche Platte kann jedoch ohne Weiteres auch wesentlich kleiner als die Grundplatte ausgebildet sein. Wichtig ist in diesem Zusammenhang das zwischen Grundplatte und Niederhalter eine umlaufende Dichtung angeordnet ist, welche die Vakuumöffnung bildet, wobei innerhalb der Vakuumöffnung im Weiteren eine Schweißvorrichtung, insbesondere ein Schweißbalken, angeordnet ist. Über die Dichtung wird, wie bereits beschrieben, der flexible Behälter insbesondere ein Einwegabfallsack gehalten, bis die Abkühlung der zu verschweißenden Materialien eingetreten ist und somit die notwendige Festigkeit gewährleistet ist.

In Abhängigkeit der verwendeten Größe der flexiblen Behälter kann es hierbei besonders vorteilhaft sein, wenn die Grundplatte und der Niederhalter durch beispielsweise seitlich angeordnete Befestigungsklammern verschließbar ausgebildet sind. Mit Hilfe der Befestigungsklammern wird hierbei ein erhöhter Anpressdruck auf die Grundplatte durch den Niederhalter ausgeübt, sodass zwischen einer Gummidichtung, welche beispielsweise auf der Grundplatte oder dem Niederhalter angeordnet ist, und dem Niederhalter oder der Grundplatte eine sichere Einklemmung des flexiblen Behälters erfolgen kann. Nach erfolgter Verschweißung mit Hilfe der Schweißvorrichtung kann durch Lösen der Klammer und Öffnen des Niederhalters der Abfallbehälter aus der Vakuumöffnung entnommen werden.

In Ausgestaltung der Erfindung ist hierbei vorgesehen, dass der Niederhalter eine umlaufende Dichtung aufweist, welche annähernd dem Konturenverlauf des Niederhalters folgt. Die Dichtung verläuft somit vorzugsweise entlang der Kanten des Niederhalters, es besteht jedoch ohne Weiteres die Möglichkeit, dass eine andere Führung oder Anordnung der Dichtung erfolgt, je nach dem welche Ausgestaltung die Grundplatte und der Niederhalter aufweist. Wichtig ist in diesem Zusammenhang, dass die Schweißvorrichtung auf der Grundplatte und/oder dem Niederhalter in derart angeordnet ist, dass sie beim Absenken des Niederhalters innerhalb der Dichtung liegend angeordnet ist.

In bevorzugter Ausgestaltung der Erfindung ist vorgesehen, dass die Vakuumöffnung großflächig gestaltet ist, um das offene Ende des Behälters flach über die gesamte Breite aufzunehmen. Die Abfallbehälter können bei entsprechender Dimensionierung relativ große Öffnungen aufweisen, sodass die hierzu erforderliche Vakuumöffnung für alle möglichen Größen eines flexiblen Behälters verwendbar ist, wobei vorzugsweise der flexible Behälter in zusammengefalteter Form in die Vakuumöffnung eingelegt wird. Nach dem Einlegen wird zunächst die Luft aus dem Behälter abgesaugt und sodann die Verschweißung der Öffnung vorgenommen. Der Unterdruck in der Vakuumöffnung und dem flexiblen Behälter wird nach der Verschweißung solange aufrecht erhalten, bis die Schweißnaht abgekühlt ist.

In weiterer Ausgestaltung der Erfindung ist vorgesehen, dass die Grundplatte zumindest eine, vorzugsweise mehrere zusätzliche Halterungen für den Behälter aufweist. Die hierbei vorgesehenen Halterungen können beispielsweise aus Klammem bestehen, unter welche die Folien des Behälters mit der Öffnungsseite geschoben werden können, sodass der Behälter flach liegend in der Vakuumöffnung positioniert ist.

Zur Durchführung der Luftabsaugung ist vorgesehen, dass die Grundplatte und/oder der Niederhalter zumindest eine Öffnung innerhalb der Dichtung aufweist, welche mit einem Vakuumgerät verbunden ist. Somit kann aus dem durch die Dichtung eingeschlossenen Raum zwischen der Grundplatte und dem Niederhalter und über die Öffnung des flexiblen Behälters die Luft aus dem Behälter abgesaugt werden, bis das gewünschte Vakuum erreicht wird, um anschließend den Schweißvorgang durchzuführen, Hierbei kann ein Teil der Schweißvorrichtung auf der Innenseite des Niederhalters und/oder auf der Innenseite der Grundplatte angeordnet sein₋

Zur Vermeidung von unangenehmen Gerüchen, welche sich innerhalb des Behälters durch den Abfall bilden können, wird vorzugsweise zwischen Vakuumgerät und den Öffnungen der Grundplatte und/oder des Niederhalters zumindest eine Filtereinheit angeordnet. Die Filtereinheit dient im Wesentlichen dazu die entstandenen Ausdünstungen und Gerüche zu absorbieren und insbesondere zu neutralisieren, sodass eine Geruchsbelästigung durch den Abfall gänzlich ausgeschlossen werden kann. Hierbei besteht die Möglichkeit, dass die Filtereinheit als Hygienefilter mit geruchsbindenden Komponenten ausgebildet ist.

Eine erfindungsgemäße Ausführungsvariante der Vorrichtung besteht hierbei aus einem Steuerungsgerät, welches oberhalb eines die Einzelkomponenten aufnehmenden Gehäuses angeordnet sein kann, wobei die Vakuumeinrichtung in horizontaler Ausrichtung ebenfalls am oberen Ende des Gehäuses befestigt sein kann, und wobei unterhalb der Vakuumeinrichtung zumindest eine Ablage und/oder eine Aufhängung für die flexiblen Behälter vorgesehen ist. Sämtliche Komponenten der Vorrichtung können hierbei bei einer stehenden Ausführungsform eines Gehäuses untergebracht werden, an deren oberen Ende sich die Vakuumeinrichtung, insbesondere die Vakuumöffnung befindet. Somit können befüllte Einwegabfallsäcke in einer günstigen Arbeitsposition in die Vakuumöffnung eingelegt werden und nach erfolgter Vakuumisierung und Verschweißung der weiteren Abfallentsorgung, insbesondere einer Verbrennung zugeführt werden.

Durch die erfindungsgemäße Vorrichtung wird hierbei insbesondere der Vorteil erreicht, dass eine Geruchsbindung und somit Belästigung vermieden wird, sodass die vakuumisierten Behälter auch über einen längeren Zeitraum an einem vorgesehenen Ort gelagert werden können. Darüber hinaus wird durch die Vakuumisierung das Volumen der gefüllten Behälter erheblich reduziert, sodass nicht nur eine kompakte Lagerung, sondern auch ein geringeres Transportvolumen entsteht. Der besondere Vorteil der erfindungsgemäßen Vorrichtung besteht hierbei darin, dass eine sichere und dauerhafte Verschweißung des offenen Endes des flexiblen Behälters gewährleistet werden kann, und zwar deshalb, weil das Gewicht des Behälters durch die verwendete Vakuumdichtung aufgefangen wird und keine Belastung der Schweißnaht während des Schweißvorganges eintritt.

Die Erfindung wird im Weiteren anhand der Zeichnungsfiguren erläutert.

Es zeigt
- Fig. 1: in einer Seitenansicht eine erfindungsgemäße Vorrichtung,
- Fig. 2: in einer Vorderansicht die Vorrichtung aus Figur 1 und
- Fig. 3: in einer perspektivischen Ansicht die erfindungsgemäße Vorrichtung.

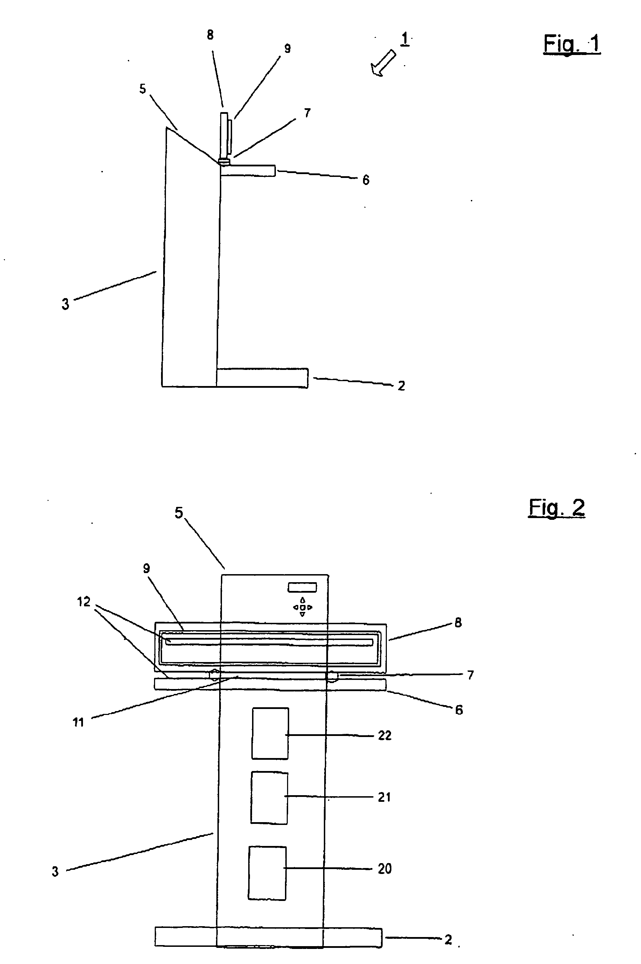

Figur 1 zeigt in einer Seitenansicht eine Vorrichtung 1 zur Vakuumisierung von flexiblen Behältern für Abfallstoffe, insbesondere Einwegabfallsäcke. Die Vorrichtung 1 besteht aus einem ortsfest oder verfahrbar gelagerten Sockelelement 2 auf dem nahezu senkrecht ein Gehäuse 3 angeordnet ist, wobei im oberen Bereich eine Bedienungseinheit 5 angeordnet ist und endseitig des Gehäuses 3 eine Grundplatte 6 angeordnet ist, an deren Längskante über schwenkbewegliche Elemente 7 ein Niederhalter 8 befestigt ist. Der Niederhalter 8 ist mit einer umlaufenden Dichtung 9 ausgestattet. Die Dichtung 9 wird beim Verschwenken des Niederhalters 8 in Richtung auf die Grundplatte 6 gegen die Grundplatte verpresst und dient somit zur sicheren Halterung eines eingelegten flexiblen Behälters. Ein Behälter ist in der Figur nicht dargestellt. Das Sockelelement 2 kann hierbei mit seitlichen Bügeln 10 ausgestattet werden, welche eine seitliche Fixierung des flexiblen Behälters beim Aufsetzen ermöglichen.

Figur 2 zeigt in einer Vorderansicht die erfindungsgemäße Vorrichtung 1, bestehend aus dem Sockelelement 2, auf dem ein Gehäuse 3 aufgesetzt ist, welches gleichzeitig die Bedienungseinheit 5 mit Schaltelement und Anzeigeinstrument aufweist. Endseitig des Gehäuses 3 ist eine Grundplatte 6 befestigt, an der ein schwenkbeweglicher Niederhalter 8 befestigt ist. Eine umlaufende Dichtung 9 begrenzt die Vakuumöffnung 11, in welche der flexible Behälter, vorzugsweise ein Einwegabfallsack, flach mit seiner Öffnung eingelegt werden kann. Das offene Ende des Einwegabfallsackes wird hierbei flach auf die Grundplatte 6 aufgelegt und gegebenenfalls mit vorhandenen Klammern insoweit gehalten, bis der Niederhalter 8 mit seiner Dichtung 9 gegen die Grundplatte 6 gepresst wird, wodurch die Öffnung des Einwegabfallsackes eingeklemmt wird. Innerhalb der Dichtung 9 befindet sich eine Schweißvorrichtung 12, welche teilweise an der Grundplatte 6 und teilweise an dem Niederhalter 8 angeordnet ist. Die Schweißvorrichtung 12 besteht hierbei vorzugsweise aus einem Schweißbalken.

Nach dem Einlegen des Abfallsackes wird zunächst die Luft aus der Vakuumöffnung 11 und dem Abfallsack abgepumpt und danach mit Hilfe der Schweißvorrichtung 12 eine Verschweißung der Öffnung durchgeführt. Nach Abkühlen der Schweißnaht kann der Niederhalter 8 nach oben verschwenkt werden, um eine Entnahme des Abfallsackes zu ermöglichen.

Im Gehäuse 3, oberhalb des Sockelelementes 2 und unterhalb der Grundplatte 6 befindet sich eine Vakuumpumpe 20 sowie eine Filtereinheit 21 und eine elektronische Steuerungseinrichtung 22, welche die Erzeugung des Vakuums und die Verschweißung des Abfallsackes über die Bedienungselemente in dem Gehäuse 3 ermöglicht.

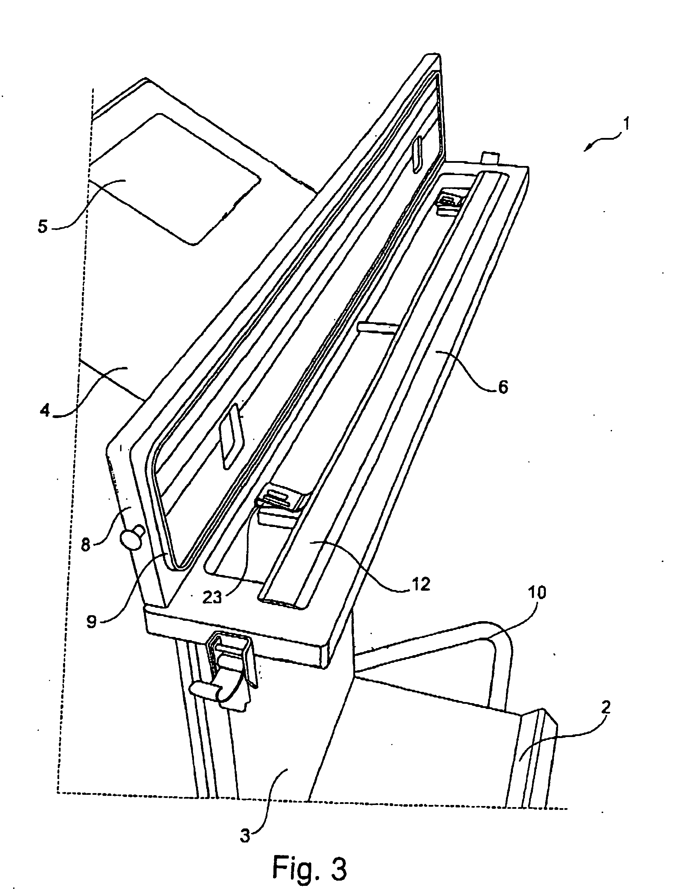

Figur 3 zeigt in einer perspektivischen Ansicht das obere Ende der erfindungsgemäßen Vorrichtung 1, und zwar das Sockelelement 2 mit seitlichen Bügeln 10 und einem Gehäuse 3, in dem die Bedienungseinheit 5 angeordnet ist. Kopfseitig des Gehäuses 3 ist eine Grundplatte 6 befestigt, welche eine Schweißvorrichtung 12 aufweist. Die Schweißvorrichtung 12 ist hierbei so angeordnet, dass sie innerhalb der Dichtung 9 zu liegen kommt, welche in dem Niederhalter 8 eingelassen ist. Der Niederhalter ist über verdeckt liegende schwenkbewegliche Elemente 7 mit der Grundplatte 6 verbunden, sodass der Niederhalter gegen die Grundplatte 6 verschwenkt und gegen die Grundplatte 6 gedrückt werden kann. Sofern ein Einwegabfallsack in die Vakuumöffnung 11 eingelegt wurde und gegebenenfalls mit Hilfe von zusätzlichen Klemmelementen 23 befestigt wurde, kann nach erfolgtem Verschwenken des Niederhalters 8 das Vakuum aus der Vakuumöffnung 11 und dem Einwegabfallsack abgesaugt werden und hiemach mit Hilfe der Schweißvorrichtung 12 das offene Ende des Einwegabfallsackes verschweißt werden. Der Unterdruck in der Vakuumöffnung 11 und des flexiblen Behälters wird solange aufrecht erhalten, bis die Schweißnaht abgekühlt ist.

Durch die erfindungsgemäße Ausführung der Vorrichtung 1 kann somit ein großvolumiger Einwegabfallsack durch die Vakuumisierung auf ein deutlich reduziertes Maß verkleinert werden, wobei insbesondere durch die weiteren Komponenten der Vorrichtung 1, insbesondere die Filtereinheit 21 die Abgabe von unangenehmen Gerüchen, welche aus dem Inhalt des Abfallsackes stammen, verhindert werden kann. Der besondere Vorteil dieser Vorrichtung 1 besteht darin, dass die Einwegabfallsäcke auf ein erforderliches Mindestmaß verkleinert werden und durch die erfolgte Vakuumisierung und Verschweißung die Einwegabfallsäcke die Entstehung von unangenehmen Gerüchen während der Lagerung ausgeschlossen werden kann.

### Bezugszelchenllste:

- 1: Vorrichtung
- 2: Sockelelement
- 3: Gehäuse
- 5: Bedienungseinheit
- 6: Grundplatte
- 7: Element
- 8: Niederhalter
- 9: Dichtung
- 10: Bügel
- 11: Vakuumöffnung
- 12: Schweißvorrichtung
- 20: Vakuumpumpe
- 21: Filtereinheit
- 22: Steuerungseinrichtung
- 23: Klemmelement

## Patentansprüche

1. Vorrichtung (1) zur Vakuumisierung von flexiblen Behältern für Abfallstoffe, umfassend zumindest ein Steuerungsgerät mit einer Halterung für die Behälter, wenigstens einer Vakuumeinrichtung und einer Schweißvorrichtung (12), wobei die Behälter mit ihrer Öffnungsseite in eine Vakuumöffnung (11) einlegbar sind,
**dadurch gekennzeichnet,**
**dass** die Vakuumöffnung (11) flach bauend ausgeführt ist und die Schweißvorrichtung (12) innerhalb einer umrandeten Dichtung (9) der Vakuumöffnung (11) angeordnet ist, welche aus einer Grundplatte (6) und einem Niederhalter (8) besteht, wobei die Grundplatte (6) zumindest ein, vorzugsweise mehrere Klemmelemente (23) zur Aufnahme der Öffnungsseite des Behälters in der Art aufweist, dass die Öffnungsseite von den Klemmelementen (23) nur teilweise verschlossen wird.

2. Vorrichtung (1) nach Anspruch 1,
**dadurch gekennzeichnet,**
**dass** die Vakuumöffnung (11) aus einer ortsfest gehaltenen Grundplatte (6) besteht, an der eine annähernd gleichgroße schwenkbewegliche Platte als Niederhalter (8) befestigt ist.

3. Vorrichtung (1) nach Anspruch 1 oder 2,
**dadurch gekennzeichnet,**
**dass** die Grundplatte (6) und der Niederhalter (8) durch beispielsweise seitlich angeordnete Befestigungsklammem verschließbar sind.

4. Vorrichtung (1) nach Anspruch 1, 2 oder 3,
**dadurch gekennzeichnet,**
**dass** der Niederhalter (8) eine umlaufende Dichtung (9) aufweist, welche annähernd dem Konturenverlauf des Niederhalters (8) folgt.

5. Vorrichtung (1) nach einem der Ansprüche 1 bis 4,
**dadurch gekennzeichnet,**
**dass** die Schweißvorrichtung (12) auf der Grundplatte (6) und/oder Niederhalter (8) in der Art angeordnet ist, dass sie beim Absenken des Niederhalters (8) innerhalb der Dichtung (9) liegt.

6. Vorrichtung (1) nach einem der Ansprüche 1 bis 5,
**dadurch gekennzeichnet,**
**dass** die Vakuumöffnung (11) großflächig gestaltet ist, um das offene Ende des Behälters flach aufzunehmen.

7. Vorrichtung (1) nach einem der Ansprüche 1 bis 6,
**dadurch gekennzeichnet,**
**dass** ein Teil der Schweißvorrichtung (12) auf der Innenseite des Niederhalters (8) und/oder der Grundplatte (6) befestigt ist.

8. Vorrichtung (1) nach einem der Ansprüche 1 bis 7,
**dadurch gekennzeichnet,**
**dass** die Schweißvorrichtung (12) aus einem Schweißbalken besteht.

9. Vorrichtung (1) nach einem der Ansprüche 1 bis 8,
**dadurch gekennzeichnet,**
**dass** zwischen Vakuumpumpe (20) und den Öffnungen der Grundplatte (6) und/oder des Niederhalters (8) zumindest eine Filtereinheit (21) angeordnet ist.

10. Vorrichtung (1) nach einem der Ansprüche 1 bis 9,
**dadurch gekennzeichnet,**
**dass** die Filtereinheit (21) als Hygienefilter mit geruchsbindenden Komponenten ausgebildet ist.

11. Vorrichtung (1) nach einem der Ansprüche 1 bis 10,
**dadurch gekennzeichnet,**
**dass** das Steuerungsgerät oberhalb eines die Einzelkomponenten aufnehmenden Gehäuses (3) angeordnet ist und die Vakuumeinrichtung in horizontaler Ausrichtung ebenfalls am oberen Ende des Gehäuses (3) befestigt ist, wobei unterhalb der Vakuumeinrichtung zumindest eine Ablage und/oder eine Aufhängung für die Behälter vorgesehen ist.

## Claims

1. Device (1) for evacuating flexible containers for waste material, comprising at least one control device with a mounting for the containers, at least one vacuum device and one welding device (12), wherein the containers can be inserted into a vacuum opening (11) with their open side,
**characterized in that**
the vacuum opening (11) is designed to be flat and the welding device (12) is disposed within a bordered seal (9) of the vacuum opening (11) which consists of a base plate (6) and a hold-down device (8), the base plate (6) comprising at least one, preferably several clamping elements (23) for receiving the open side of the container in such a way that the open side is only partially closed by the clamping elements (23).

2. Device (1) according to claim 1,
**characterized in that**
the vacuum opening (11) consists of a stationarily held base plate (6) to which an approximately equally dimensioned plate is fixed as a hold-down device (8) that can be moved by pivoting.

3. Device (1) according to claim 1 or 2,
**characterized in that**
the base plate (6) and the hold-down device (8) can be closed by fixing clamps that are arranged, for example, laterally.

4. Device (1) according to claim 1, 2 or 3,
**characterized in that**
the hold-down device (8) comprises a surrounding seal (9) which approximately follows the contour of the hold-down device (8).

5. Device (1) according to one of claims 1 to 4,
**characterized in that**
the welding device (12) is disposed on the base plate (6) and/or the hold-down device (8) in such a way that it is situated within the seal (9) when the hold-down device (8) is lowered.

6. Device (1) according to one of claims 1 to 5,
**characterized in that**
the vacuum opening (11) is designed with a large surface to receive the open end of the container flatly.

7. Device (1) according to one of claims 1 to 6,
**characterized in that**
a portion of the welding device (12) is fixed to the inner side of the hold-down device (8) and/or the base plate (6).

8. Device (1) according to one of claims 1 to 7,
**characterized in that**
the welding device (12) consists of a welding bar.

9. Device (1) according to one of claims 1 to 8,
**characterized in that**
between the vacuum pump (20) and the openings of the base plate (6) and/or the hold-down device (8), at least one filter unit (21) is arranged.

10. Device (1) according to one of claims 1 to 9,
**characterized in that**
the filter unit (21) is designed as hygienic filter with odour-absorbing components.

11. Device (1) according to one of claims 1 to 10,
**characterized in that**
the control device is disposed above a housing (3) that receives the individual components, and the vacuum device is also fixed to the upper end of the housing (3) in a horizontal orientation, wherein underneath the vacuum device, at least one support and/or suspension for the containers is provided.

## Revendications

1. Dispositif (1) de mise sous vide de récipients flexibles pour déchets, comprenant au moins un appareil de commande avec un support pour les récipients, au moins un dispositif de mise sous vide et un dispositif de soudage (12), les récipients pouvant être insérés avec leur côté ouverture dans une ouverture à vide (11),
**caractérisé par le fait que**
l'ouverture à vide (11) est réalisée avec une structure plate et le dispositif de soudage (12) est disposé à l'intérieur d'un joint (9), prévu d'un bord, de l'ouverture à vide (11), qui est composé d'une plaque de base (6) et d'un dispositif de maintien (8), la plaque de base (6) présentant au moins un, préférentiellement plusieurs éléments de serrage (23) pour la réception du côté ouverture du récipient de telle sorte que le côté ouverture est obturé seulement partiellement par des éléments de serrage (23).

2. Dispositif (1) selon la revendication 1,
**caractérisé par le fait que**
l'ouverture à vide (11) est constituée d'une plaque de base (6) maintenue fixe, sur laquelle une plaque pivotante approximativement de la même taille est fixée comme dispositif de maintien (8).

3. Dispositif (1) selon la revendication 1 ou 2,
**caractérisé par le fait que**
la plaque de base (6) et le dispositif de maintien (8) peuvent être fermés par exemple par des pinces de fixation disposées latéralement.

4. Dispositif (1) selon la revendication 1, 2 ou 3,
**caractérisé par le fait que**
le dispositif de maintien (8) présente un joint (9) périphérique, qui suit approximativement le contour du dispositif de maintien (8).

5. Dispositif (1) selon l'une des revendications 1 à 4,
**caractérisé par le fait que**
le dispositif de soudage (12) est disposé sur la plaque de base (6) et/ou le dispositif de maintien (8) de telle sorte qu'il se trouve à l'intérieur du joint (9) lors de l'abaissement du dispositif de maintien (8).

6. Dispositif (1) selon l'une des revendications 1 à 5,
**caractérisé par le fait que**
l'ouverture à vide (11) est agencée sur une grande surface pour recevoir à plat l'extrémité ouverte du récipient.

7. Dispositif (1) selon l'une des revendications 1 à 6,
**caractérisé par le fait**
**qu'**une partie du dispositif de soudage (12) est fixée sur la face intérieure du dispositif de maintien (8) et/ou de la plaque de base (6).

8. Dispositif (1) selon l'une des revendications 1 à 7,
**caractérisé par le fait que**
le dispositif de soudage (12) est constitué d'une mâchoire de soudage.

9. Dispositif (1) selon l'une des revendications 1 à 8,
**caractérisé par le fait**
**qu'**au moins une unité de filtre (21) est disposée entre la pompe à vide (20) et les ouvertures de la plaque de base (6) et/ou du dispositif de maintien (8).

10. Dispositif (1) selon l'une des revendications 1 à 9,
**caractérisé par le fait que**
l'unité de filtre (21) est agencée comme un filtre hygiénique avec des composants retenant les odeurs.

11. Dispositif (1) selon l'une des revendications 1 à 10,
**caractérisé par le fait que**
l'appareil de commande est disposé au-dessus d'un boîtier (3) recevant les différents composants et le dispositif de mise sous vide est fixé dans une orientation horizontale également à l'extrémité supérieure du boîtier (3), au moins une étagère et/ou une suspension pour les récipients est disposée en dessous du dispositif de mise sous vide.
